(19)

Europäisches
Patentamt
European
Patent Office
Office européen
des brevets

(11) **EP 3 404 586 A1**

(12) **EUROPEAN PATENT APPLICATION**

(43) Date of publication:
**21.11.2018 Bulletin 2018/47**

(51) Int Cl.:
***G06N 3/04*** (2006.01)

(21) Application number: **18169136.1**

(22) Date of filing: **24.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2017 US 201762508016 P**
**19.06.2017 US 201715626457**

(71) Applicant: **INTEL Corporation**
**Santa Clara, CA 95054 (US)**

(72) Inventors:
• **KLIGER, Mark**
**Modi'in-Macabim-Reut 7178502 (IL)**
• **FLEISHMAN, Shahar**
**4522796 Hod Hasharon (IL)**

(74) Representative: **V.O.**
**P.O. Box 87930**
**2508 DH Den Haag (NL)**

(54) **NOVELTY DETECTION USING DISCRIMINATOR OF GENERATIVE ADVERSARIAL NETWORK**

(57) An example apparatus for detecting novel data includes a discriminator trained using a generator to receive data to be classified. The discriminator may also be trained to classify the received data as novel data in response to detecting that the received data does not correspond to known categories of data.

200

FIG. 2

EP 3 404 586 A1

## Description

## Background

One of the tasks of an Artificial Intelligence (AI) system may be to output high-level information about its surrounding. For example, given an input image, an AI goal may be to write a computer program that outputs some high-level information about a captured image, such as a description of what is in the image, which objects are in the image, and where these objects are on the image, etc.

In some examples, Machine learning (ML) based methods, and more specifically algorithms developed using a supervised-learning (SL) paradigms, may be used to output such high-level information. For example, a supervised learning algorithm may analyze training data and produce an inferred function, which can be used for mapping new examples.

## Brief Description of the Drawings

Fig. 1 is a block diagram illustrating an example system for detecting novel data via a discriminator trained with a generator;

Fig. 2 is a flow chart illustrating an example method for training a discriminator with a generator to detect novel data;

Fig. 3 is a process flow diagram illustrating an example method for detecting novel data via a trained discriminator;

Fig. 4 is block diagram illustrating an example computing device that can detect novel data via a trained discriminator; and

Fig. 5 is a block diagram showing computer readable media that store code for training and detecting novel data via a discriminator.

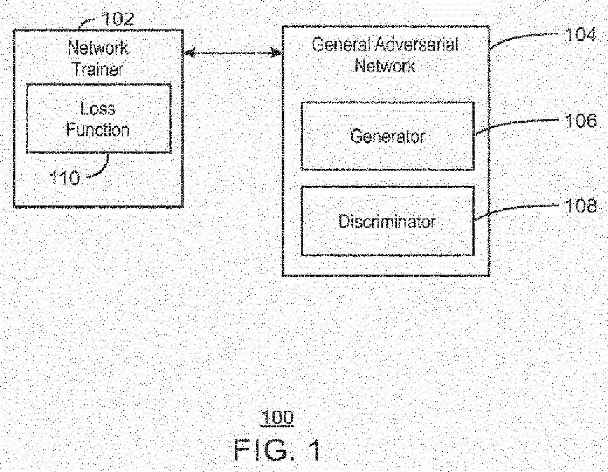

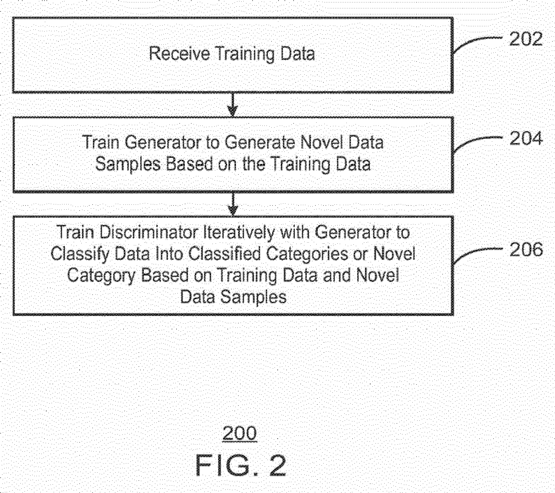

The same numbers are used throughout the disclosure and the figures to reference like components and features. Numbers in the 100 series refer to features originally found in Fig. 1; numbers in the 200 series refer to features originally found in Fig. 2; and so on.

## Description of the Embodiments

As discussed above, machine learning algorithms may be used to output information about objects in input images. For example, inputs may be images or audio signals and outputs may be detected objects or speech phonemes. The training data may be a set of point pairs $T = \{(X, Y)_i\}$, where each point $x_i$ in the input space has a corresponding point $y_i$ in the output space. For example, in an image classification task, an input space $\{x_i\}$ may be the space of images and the output space $\{y_i\}$ may be a label of the object that is in the image such as "cat" or "hat" or "dog". In speech recognition tasks, as another example, the input may be the audio signal and the output may be a phoneme of a speech.

However, although supervised learning (SL) algorithms can be trained to compute multiple outputs, they may not be able to recognize new types of input. For example, some SL algorithms may be able to generalize about object, to reason or classify examples that are reasonably similar to the training data. For example, if trained to recognize chairs with 1000 samples of chairs and then requested to infer about a 1001st chair, some SL algorithms may be able to do so. However, for example, such algorithms may not be able to recognize a cat, if not trained to recognize cats. Often there may be no requirements on how a classifier should behave for new types of input that substantially differ from the data that are available during training. Instead, the algorithms may produce some erroneous output from other known classes, sometimes with a high confidence score.

Generative Adversarial Network (GAN) frameworks may be used as generative frameworks for generating realistic samples of natural images. For example, generative adversarial networks may be an approach to generative modeling where two models are trained simultaneously: a generator G and a discriminator D. A discriminator may be tasked with classifying its inputs as either the output of the generator, referred to herein as "fake" data, or actual samples from the underlying data distribution, referred to herein as "real" data. The goal of the generator may be to produce outputs that are classified by the discriminator as coming from the real data of the underlying data distribution.

In some examples of GANs, a discriminator D may be trained to classify real data not only into two classes of "real" data and "fake" data, but rather into multiple classes. In such examples, if the "real" data consist of K classes, the output of discriminator D may be K+1 class probabilities, where K probabilities corresponds to K known classes, and the K+1 probability corresponds to the "fake" generated class. Moreover, in some examples, such GANs can be trained in a semi-supervised learning (SSL) manner. For example, some examples of real data may have labels, and other examples of real data may be unlabeled. However, it may be known in advance that these unlabeled examples are examples of one of the known classes.

The present disclosure relates generally to techniques for novel data detection. Specifically, the techniques described herein include an apparatus, method and system for training discriminators of generative adversarial networks and detecting novel data using the trained discriminators. An example apparatus includes a network trainer to train a generator to generate novel data and a discriminator to classify the received novel data as novel in response to detecting that the data does not correspond to any classified category. For example, the novel data may be data that is different from the training data.

The techniques described herein also provide for simultaneous classification and novelty detection. Novelty detection, as used herein, may be defined as the task of recognizing that test data differs in some manner from the data that was available during training. In particular, a discriminator network can be trained to detect novel data using novel examples generated during training. In some examples, the techniques described herein can use a generator of a Generative Adversarial Network (GAN) to generate the novel examples for training a discriminator of the GAN to simultaneously classify data and detect novel data. For example, the techniques described herein may be used to determine whether an input is from the known set of classes and from which specific class, or from an unknown source and does not belongs to any of the known classes. The novelty detector may thus be a co-product of training a Generative Adversarial Network (GAN) with a multi-class discriminator. For example, the generator of a GAN may generate samples from a mixture of "real" data distribution and an unknown distribution of the "fake" data. Using the unknown distribution as a novel data input, the discriminator of the GAN may then then trained as a novelty detector.

The techniques described herein may use the discriminator of a multi-class GAN for simultaneous classification and novelty detection. For example, during training the generator may generate a mixture of nominal, or real, data and novel data, and the discriminator learns to discriminate them. For example, the novel data may include noisy images, spurious images, and novel objects. After training, the discriminator may classify real data to any number of known K classes or to the K+1 class, which may represent novel data. For example, the K+1 class may have represented "fake" data during training, and thus be used to detect a novel example, or an example that is not from one of the K nominal classes.

The techniques described herein thus enable training of networks using a wider range of training data input when compare to techniques that can only use labeled data input. In some cases, at least some of the input training data may not be labeled. The techniques described herein may also save the time and expense of labeling of input data such as images, sounds, markers, etc. Experiments performed using the techniques described herein have empirically shown that the techniques described herein outperform conventional methods for novelty detection. The techniques described herein provide a simple, but powerful application of the Generative Adversarial Network framework for the task of novelty detection.

Moreover, the techniques described herein can be used by devices to simultaneously classify known objects and detect novel objects. For example, the techniques may be used to interact with objects that may not have been included in any training data set, in addition to known objects that may have been included in the training data set. In addition, the techniques described herein may be performed in the settings of artificial neural networks and may not require any background samples. Moreover, the ability of a classifier to recognize novel input may be used in many different classification-based systems.

In one example, the techniques described herein may be used for detecting objects by a robotic vacuum cleaners. For example, a robot may detect objects to vacuum and objects to bypass or move aside. The object recognition system can be trained on a significant number of common objects, but not every possible object. For example, such training may not be practical, as it may take a lot of time and money to collect such a training set. Moreover, current machine learning systems may have significant error in case of unknown objects in which that object is identified with high degree of certainty as a different object. For example, the robot may mistake a diamond-ring with some debris that needs to be vacuumed and therefore make the wrong decision in such case. A possible fallback for such a system may be to bypass unknown object types. Therefore, the system may use a trained discriminator 108 to detect novel data and thus bypass unknown object types associated with the detected novel data.

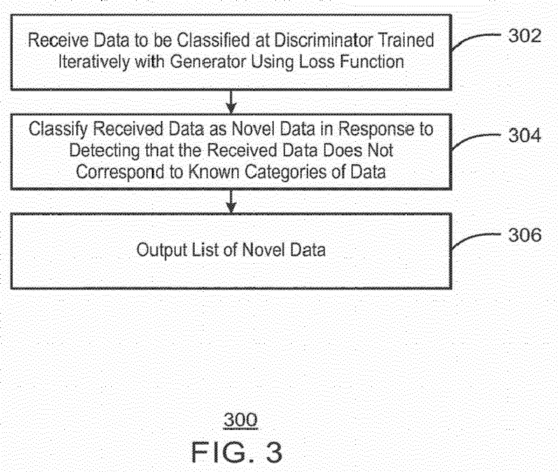

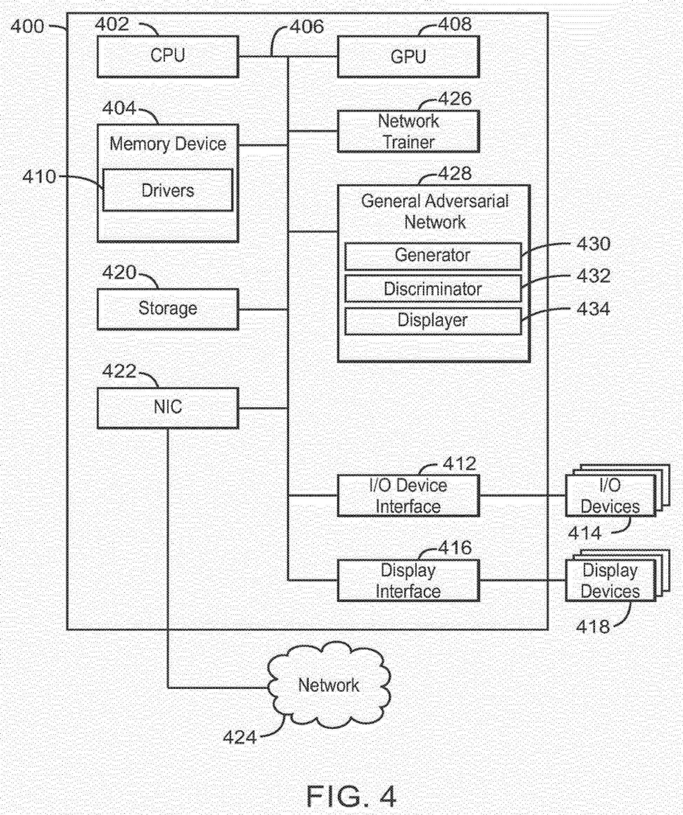

Fig. 1 is a block diagram illustrating an example system for detecting novel data via a discriminator trained with a generator. The example system is referred to generally by the reference number 100 and can be implemented in the computing device 400 below in Fig. 4 using the training method 200 of Fig. 2 below and the method 300 of Fig. 3 below.

The example system 100 includes a network trainer 102 and a generative adversarial network (GAN) 104. The GAN 104 includes a generator 106 and a discriminator 108. For example, the generator 106 and discriminator 108 may be networks to be trained using the network trainer 102. The generator and discriminator may have different loss functions. For example, the discriminator may be used to compute the loss function for the generator.

As shown in Fig. 1, a discriminator 108 of a GAN 104 may be trained to detect novel data. The generator 106 of a GAN 104 may be trained to try to generate a mixture of "real" and novel data. As used herein, novel data may be described as data that is significantly different from the training data used to train the discriminator 108. The generator 106 may thus generate both data to be classified by the discriminator into one of one or more classified categories or a novel data category. The discriminator 108 may thus be iteratively trained using the output samples of the generator 106 and real data from a training set. For example, the discriminator 108 may be trained using the method 200 described below. In some examples, the discriminator 108 and generator 106 can be trained using any suitable semi-supervised learning (SSL) techniques.

In some examples, given a training dataset of nominal data with a distribution $p_{data}(x)$ and an unlabeled dataset that contains a mixture of nominal and novel data of the form $\pi p_{novel}(x) + (1 - \pi)p_{data}(x)$, a statistically consistent novelty detector can be described by the equation:

$$\frac{\pi p_{novel}(x) + (1-\pi)p_{data}(x)}{p_{data}(x)} = \frac{\pi p_{novel}(x)}{p_{data}(x)} + (1 - \pi) \qquad \text{Eq. 1}$$

As described above, Generative Adversarial Networks may typically be used for generative modeling. For example, a GAN may include two competing differentiable functions that can be implemented using neural network models. One model, which may be called the generator 104 $G(z; \theta^G)$, can map a noise sample z sampled from some prior distribution $p(z)$ to the "fake" sample x = $G(z; \theta^G)$; x should be similar to a "real" sample sampled from the nominal data distribution $p_{data}(x)$. The objective of the other model called the discriminator 108 $D(x; \theta^D)$ may be to correctly distinguish generated samples from the training data which samples $p_{data}(x)$. In some examples, this may be viewed as a minimax game between the two models with a solution at the Nash equilibrium. However, there may be no closed-form solution to such problem. Therefore, the solution may be approximated using iterative gradient-based optimizations of the generator and the discriminator functions. The discriminator can be optimized by maximizing:

$$\max_{\theta^D} \mathbb{E}_{x \sim p_{data}(x)}[\log D(x; \theta^D)] + \mathbb{E}_{z \sim p(z)}[\log(1 - D(G(z; \theta^G); \theta^D))] \quad \text{Eq. 2}$$

and the generator can be optimized by minimizing:

$$\min_{\theta^G} \mathbb{E}_{z \sim p(z)}[\log(1 - D(G(z; \theta^G); \theta^D))] \qquad \text{Eq. 3}$$

This loss typically saturates during training and the generator can be optimized by maximizing a proxy loss:

$$\max_{\theta^G} \mathbb{E}_{z \sim p(z)}[\log(D(G(z; \theta^G); \theta^D))] \qquad \text{Eq. 4}$$

For a fixed generator G(z), a discriminator can take the form:

$$D_G^*(x) = \frac{p_{data}(x)}{p_{data}(x) + p_g(x)} \qquad \text{Eq. 5}$$

GANs may be used in various tasks such as realistic image generation, 3D object generation, text-to-image generation, video generation, image-to-image generation, image inpainting, super-resolution, and many more. However, the generators of GANs may typically only be used at a test time, while the discriminator $D$ may be trained just for the sake of training the generator and may not used at test time. As used herein, test time may refer to a time in which a trained GAN is used. In contrast, in some semi-supervised classifiers based on GAN (SSL-GAN), where only a small fraction of the real examples has labels and the bulk of the real data are unlabeled, the GAN framework may be able to train a powerful multi-class classifier, or discriminator D. In order to improve the GAN convergence, the generator may be optimized by minimizing a Feature matching loss:

$$L_{FM}(x) = \min_{\theta^G} \left\| \mathbb{E}_{x \sim p_{data}(x)}[f(x)] - \mathbb{E}_{z \sim p(z)}[f(G(z; \theta^G))] \right\| \qquad \text{Eq. 6}$$

where f(x) is an intermediate layer of the fixed discriminator. Optimizing or modifying a generator using the feature matching loss may result in samples which are not high visual quality, but the resulting multi-class discriminator may perform well for supervised classification and for semi-supervised classification as well.

In conventional GAN models, the Nash equilibrium may be reached when $pg(x) = p_{data}(x)$. However, GAN models may be difficult to train and the generator may thus never converge to $pdata(x)$. Moreover, heuristic generator loss functions as in Eq.6 cannot even theoretically converge to the Nash equilibrium and therefore $pg(x) \mathrel{/=} p_{data}(x)$. Otherwise, at a Nash equilibrium, the discriminator is constant for the whole data domain, which may make the discriminator useless for classification.

In some examples, the inability of a GAN generator 106 to converge to the real data distribution may be used for training novelty detection. In particular, the generator 106 can generate examples outside of the training data distribution for novelty detection training. For example, the generator 106 may produce blurry images, spurious images, and real images, which may sometimes be substantially different from those that appear in the training set. In some examples, the generator 106 can produce a mixture $p_g(x) = \pi_{Pnoval}(x) + (1 - \pi)P_{data}(x)$ of the real data distribution $P_{data}(x)$ and of other data $p_{novel}(x)$ - novel images, spurious and blurry images, and noise. Therefore, according to Eq.1 the discriminator 108, which may be trained to recognize "fakes" produced by the generator, can also be a novelty detector. Indeed, if $P_g(x) = \pi_{Pnoval}(x) + (1 - \pi)P_{data}(x)$ then from Eq.1 and Eq.5, a resulting equation may be:

$$\frac{1-D_G^*(x)}{D_G^*(x)} = \frac{p_g(x)}{p_{data}(x)} = \frac{\pi p_{novel}(x)+(1-\pi)p_{data}(x)}{p_{data}(x)} = \frac{p_{novel}(x)}{p_{data}(x)} + (1-\pi) \qquad \text{Eq. 7}$$

The left hand side $\dfrac{1-D_G^*(x)}{D_G^*(x)}$ of Eq. 7 is the output of the discriminator, or the ratio of the probability of a sample x to be "fake" divided by the probability of the sample to be from the nominal data $\dfrac{p_g(x)}{p_{data}(x)}$. According to Eq.1 above, the likelyhood of the sample to be from the nominal data is equal to $\dfrac{p_{novel}(x)}{p_{data}(x)}$, which by thresholding may be the optimal novelty detector. Thus, the output of the discriminator for fake is the optimal novelty detector under the assumption that $p_g(x)$ is a mixture of novel and nominal data.

Thus, a method for simultaneous classification and novelty detection may begin by training a GAN 104 in a multi-class setting. When the discriminator 108 of the GAN 104 classifies an input example as "fake", the example may be classified by the discriminator 108 as a novel example. Otherwise, the class with the highest probability score may be the classification result. Thus, the generator 106 of the GAN 104 may be used to generate novel samples turn the novelty-detection problem into a supervised learning problem without collecting "background-class" data. As used herein, background class data may be labeled data used to train a classifier to classify data as belonging to none of the real classes. Moreover, using a discriminator as a simultaneous multi-class classifier and novelty detector may add minimal additional computation burden at inference time.

In some examples, a loss function may also be used for training the generator 106. For example, although in practice the generator 106 may never converge to the actual nominal data distribution, a loss function may nevertheless be included for the generator that encourages the generator to generate various novel images. For example, the loss function may be a boundary-seeking loss. As used herein, a boundary-seeking loss is a function where loss is minimized on the boundary of the distribution of the nominal data. Using the boundary-seeking loss function, the generator 106 may be trained to model examples outside of the training data distribution, but which reside on the boundary of distribution of the real classes. In some examples, a boundary-seeking loss function may be defined for the generator 106 to train the generator 106 to generate examples on the boundary of the nominal data108 $\left(log\left(\dfrac{D(G(z;\theta^G))}{1-D(G(z;\theta^G))}\right)\right)^2$, which may have a minimum when $D(x) = 1/2$. For example, the boundary of this discriminator 108 may be used to estimate the boundary of the distribution of the nominal classes. In some examples, a control parameter may be added to control the margin from the boundary to define a boundary-seeking loss function for the generator 106 using the equation:

$$L_{BS}(\theta^G) = \left(log\left(\frac{\alpha \cdot D(G(z;\theta^G))}{(1-\alpha)\cdot\left(1-D(G(z;\theta^G))\right)}\right)\right)^2 \qquad \text{Eq. 10}$$

wherein $\alpha$ denotes a control parameter that controls a distance from the boundary between nominal and novel data. In some examples, setting $\alpha$ to a value higher than ½ may move the margin away from the real classes, reducing the false-positive rate of the novelty detector, and vice versa. In some examples, the boundary-seeking loss function may be combined with a feature-matching loss function to create a final loss function for the generator 106. For example, the feature-matching loss as in Eq 6. By training a generator with respect to the feature-matching loss, the generator 106 may produce examples with feature representation in an intermediate layer of the discriminator 108 that are similar to the feature representation of the real examples. A combined loss function for the generator 106 may be based on the equation:

$$L_{novel} = (1 - \gamma)L_{FM} + \gamma L_{BS} \qquad \text{Eq. 11}$$

where $\gamma$ is a hyper-parameter. In equation 11, the hyper-parameter $\gamma$ may be set to a very small number. For example, the parameter $\gamma$ may be set to a value of .001. The generator 106 trained using this loss will generate samples that look like real images but still not purely from the nominal data distribution. Therefore, a discriminator 108 trained with this generator may be capable of recognizing novel examples.

In some examples, the discriminator 108 may be trained to classify data into K+1 classes, where the first K classes represent real classes, and class K+1 represents novel data. The discriminator 108 may be trained to classify labeled examples into a correct class using usual cross-entropy loss, to classify unlabeled real examples in any of K classes, but not into class K+1, and to classify novel examples generated by the generator 106 into class K+1. In some examples, the generator 106 and discriminator 108 networks may be trained simultaneously. The generator 106 and discriminator 108 networks may thus iteratively interact. For example, the generator 106 may be trained to produce novel samples, and the discriminator 108 may be trained to distinguish generated novel data from the classified training data. When the discriminator 108 is thus trained with a fixed generator 106 that generates such mixture distributions, the resulting trained discriminator 108 may be a novelty detector in addition to a classifier.

In some examples, once the discriminator 108 is trained, the discriminator 108 may be used to detect novel data. An example method 300 for detecting novel data using the discriminator 108 is described with respect to Fig. 3 below. For example, the discriminator 108 may receive input data. In some examples, the input data may be visual data, text, speech, genetic sequences, biomedical signals and markers, among other possible types of input data. The discriminator 108 may then detect that an input data is novel data in response to detecting that the input data does not belong to any of the classified categories.

The diagram of Fig. 1 is not intended to indicate that the example system 100 is to include all of the components shown in Fig. 1. Rather, the example system 100 can be implemented using fewer or additional components not illustrated in Fig. 1 (e.g., additional GANs, network trainers, components, loss functions, etc.).

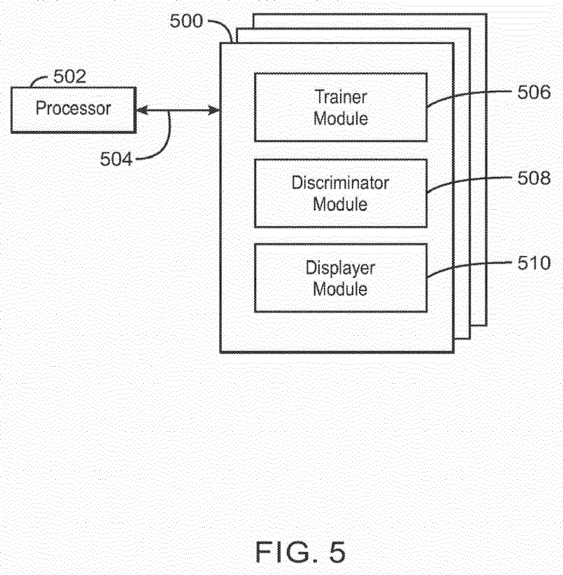

Fig. 2 is a flow chart illustrating a method for training a discriminator with a generator to detect novel data. The example method is generally referred to by the reference number 200 and can be implemented using the network trainer 102 of Fig. 1 above, the processor 402 and network trainer 426 of the computing device 400 of Fig. 4 below, or the trainer module 508 of the computer readable media 500 of Fig. 5 below.

At block 202, a processor receives training data. For example, the training data may be nominal data represented by a training set of pairs T = {(X, Y)$_i$}. Each point $x_i$ may be a data point and $y_i$ may be a corresponding discrete label. In some examples, there may be K different classes.

At block 204, the processor trains a generator iteratively with a discriminator to generate novel data samples based on the training data. In some examples, the generator may be trained using a boundary-seeking loss function, a feature-matching loss function, or a combined loss function based on the boundary-seeking loss function and the feature-matching loss function, to generate novel data samples. For example, the combined loss function of Eq. 12 above may be used to train the generator.

At block 206, the processor iteratively trains the discriminator with the generator to classify data into classified categories or a novel category based on the training data and the novel data samples. For example, the novel data samples may be received from the generator during the training and the discriminator may be trained to classify the novel data samples as novel data. Likewise, the discriminator may be trained to classify labeled data samples from the training data into one or more classified categories. In some examples, the processor may send the generated novel data samples and data samples corresponding to one or more categories from the training data to the discriminator and adjust a parameter of the discriminator based on an output classification from the discriminator. The discriminator may thus be trained on both novel data samples and real samples from the training data. When the discriminator improves to recognize the generator samples as "fake", the generator loss may be growing. Thus, in order to reduce this loss, the generator can be trained. In this way, the discriminator and generator may be trained iteratively. For example, the training may include one or few rounds of training generator, followed by one of few rounds of training the discriminator and repeating the whole process as indicated by an arrow 208.

This process flow diagram is not intended to indicate that the blocks of the example process 200 are to be executed in any particular order, or that all of the blocks are to be included in every case. Further, any number of additional blocks not shown may be included within the example process 200, depending on the details of the specific implementation.

Fig. 3 is a flow chart illustrating a method for detecting novel data via a trained discriminator. The example method is generally referred to by the reference number 300 and can be implemented in the discriminator 110 of the generative adversarial network 106 of the computer device 104 of Fig. 1 above, the discriminator 432 of the GAN 428 of the computing device 400 of Fig. 4 below, or the discriminator module 508 of the computer readable media 500 of Fig. 5 below.

At block 302, the discriminator receives data to be classified. For example, the discriminator may have been trained iteratively with a generator using a loss function as described in Fig. 2 above. The received data may include an image with at least one object to be classified.

At block 304, the discriminator classifies the received data as novel data in response to detecting that the received data does not correspond to classified categories of data. In some examples, the discriminator may classify the data in a corresponding classification category in response to detecting that the data corresponds to that category. For example, the discriminator can calculate a probability score for the data for each of a number of known classes. The known classes may correspond to labels from the training data received in Fig. 2 above. The discriminator can then classify the received data as a particular class in response to detecting that the received data comprises a higher probability score for the particular class than other classes. Thus, the discriminator may simultaneously classify known data and detect novel data.

At block 306, a processor outputs a list of novel data. For example, the list of novel data may include the received data classified as novel data. In some examples, the novel data may then be used to perform some action. For example, the novel data may be used to detect an unknown object and interact with the unknown object accordingly.

This process flow diagram is not intended to indicate that the blocks of the example process 300 are to be executed in any particular order, or that all of the blocks are to be included in every case. Further, any number of additional blocks not shown may be included within the example process 300, depending on the details of the specific implementation.

Referring now to Fig. 4, a block diagram is shown illustrating an example computing device that can detect novel data via a trained discriminator. The computing device 400 may be, for example, a laptop computer, desktop computer, tablet computer, mobile device, or wearable device, among others. In some examples, the computing device 400 may be a smart camera or a digital security surveillance camera. For example, the computing device 400 may be part of an autonomous driving system, a visual system for robotics, or an augmented reality system. The computing device 400 may include a central processing unit (CPU) 402 that is configured to execute stored instructions, as well as a memory device 404 that stores instructions that are executable by the CPU 402. The CPU 402 may be coupled to the memory device 404 by a bus 406. Additionally, the CPU 402 can be a single core processor, a multi-core processor, a computing cluster, or any number of other configurations. Furthermore, the computing device 400 may include more than one CPU 402. In some examples, the CPU 402 may be a system-on-chip (SoC) with a multi-core processor architecture. In some examples, the CPU 402 can be a specialized digital signal processor (DSP) used for image processing. The memory device 404 can include random access memory (RAM), read only memory (ROM), flash memory, or any other suitable memory systems. For example, the memory device 404 may include dynamic random access memory (DRAM).

The memory device 404 can include random access memory (RAM), read only memory (ROM), flash memory, or any other suitable memory systems. For example, the memory device 404 may include dynamic random access memory (DRAM). The memory device 404 may include device drivers 410 that are configured to execute the instructions for device discovery. The device drivers 410 may be software, an application program, application code, or the like.

The computing device 400 may also include a graphics processing unit (GPU) 408. As shown, the CPU 402 may be coupled through the bus 406 to the GPU 408. The GPU 408 may be configured to perform any number of graphics operations within the computing device 400. For example, the GPU 408 may be configured to render or manipulate graphics images, graphics frames, videos, or the like, to be displayed to a user of the computing device 400.

The memory device 404 can include random access memory (RAM), read only memory (ROM), flash memory, or any other suitable memory systems. For example, the memory device 404 may include dynamic random access memory (DRAM). The memory device 404 may include device drivers 410 that are configured to execute the instructions for generating virtual input devices. The device drivers 410 may be software, an application program, application code, or the like.

The CPU 402 may also be connected through the bus 406 to an input/output (I/O) device interface 412 configured to connect the computing device 400 to one or more I/O devices 414. The I/O devices 414 may include, for example, a keyboard and a pointing device, wherein the pointing device may include a touchpad or a touchscreen, among others. The I/O devices 414 may be built-in components of the computing device 400, or may be devices that are externally connected to the computing device 400. In some examples, the memory 404 may be communicatively coupled to I/O devices 414 through direct memory access (DMA).

The CPU 402 may also be linked through the bus 406 to a display interface 416 configured to connect the computing device 400 to a display device 418. The display device 418 may include a display screen that is a built-in component of the computing device 400. The display device 418 may also include a computer monitor, television, or projector, among others, that is internal to or externally connected to the computing device 400.

The computing device 400 also includes a storage device 420. The storage device 420 is a physical memory such as a hard drive, an optical drive, a thumbdrive, an array of drives, a solid-state drive, or any combinations thereof. The storage device 420 may also include remote storage drives.

The computing device 400 may also include a network interface controller (NIC) 422. The NIC 422 may be configured to connect the computing device 400 through the bus 406 to a network 424. The network 424 may be a wide area network (WAN), local area network (LAN), or the Internet, among others. In some examples, the device may communicate with other devices through a wireless technology. For example, the device may communicate with other devices via a wireless local area network connection. In some examples, the device may connect and communicate with other devices via Bluetooth® or similar technology.

The computing device 400 further includes a network trainer 426. The network trainer 426 may be used to train the generative adversarial network 428 below. For example, the network trainer 426 may train the generative adversarial network 428 as described in Fig. 2 above.

The computing device 400 thus further includes a generative adversarial network 428. For example, the generative adversarial network 428 can be used to detect novel data. The generative adversarial network 428 can include a generator 430, a discriminator 432, and a displayer 434. In some examples, each of the components 430-434 of the GAN 428 may be a microcontroller, embedded processor, or software module. The generator 430 can be used by the network trainer 426 to iteratively train the discriminator 432. In some examples, generator 430 can generate novel data based training data using a loss function. For example, the loss function may be a boundary-seeking loss function, a feature-matching loss function, or a combination loss function based on a boundary-seeking loss function and a feature-matching loss function. The novel data may then be used for training the discriminator 432. For example, the discriminator 432 can be trained iteratively with the generator 430 based on the training data and the novel data samples. The discriminator 432 can be trained using class labels in training data and the novel data to classify received data as novel data in response to detecting that the received data does not correspond to known categories of data. The discriminator 432 may then receive data to be classified. For example, the received data comprises visual data, text, speech, a genetic sequence, a biomedical signal, a marker, or any combination thereof. The discriminator 432 can be trained to classify received data into a category in response to detecting that the received data corresponds to a known category. For example, the discriminator 432 can classify the received data as a particular class in response to detecting that the received data comprises a higher probability score for the particular class than other classes. The discriminator 432 can also classify the received data as novel data in response to detecting that the received data does not correspond to known categories of data. The displayer 434 can display a list of novel data comprising the received data. In some examples, the displayer 434 can display a list of classified data and data detected as novel data. In some examples, the detected classified data or novel data may correspond to objects detected in images. For example, the novel data may be an unknown object in an image.

The block diagram of Fig. 4 is not intended to indicate that the computing device 400 is to include all of the components shown in Fig. 4. Rather, the computing device 400 can include fewer or additional components not illustrated in Fig. 4, such as additional buffers, additional processors, and the like. The computing device 400 may include any number of additional components not shown in Fig. 4, depending on the details of the specific implementation. Furthermore, any of the functionalities of the CPU 402 may be partially, or entirely, implemented in hardware and/or in a processor. For example, the functionality of the speech recognizer 428 may be implemented with an application specific integrated circuit, in logic implemented in a processor, in logic implemented in a specialized graphics processing unit such as the GPU 408, or in any other device.

Fig. 5 is a block diagram showing computer readable media 500 that stores code for training and detecting novel data via a discriminator. The computer readable media 500 may be accessed by a processor 502 over a computer bus 504. Furthermore, the computer readable medium 500 may include code configured to direct the processor 502 to perform the methods described herein. In some embodiments, the computer readable media 500 may be non-transitory computer readable media. In some examples, the computer readable media 500 may be storage media.

The various software components discussed herein may be stored on one or more computer readable media 500, as indicated in Fig. 5. For example, a trainer module 506 may be configured to train a generator and discriminator. For example, the trainer module 506 may be configured to train the generator to generate novel data samples based on the training data. In some example, the trainer module 506 may be configured to train the generator to generate novel data samples. For example, the trainer module 506 may train the generator with a discriminator to generate novel data. For example, the discriminator may be used to compute a loss function for the generator. In some examples, the loss function may be a boundary-seeking loss function, a feature-matching loss function, or a combined loss function based on a boundary-seeking loss function and a feature-matching loss function. In some examples, the trainer module 506 may be configured to iteratively train the discriminator with the generator to classify data into classified categories or a novel category based on the training data and the novel data samples. A discriminator module 508 may be configured to be trained using a training data set and novel data generated by a generator. In some examples, the discriminator module 508 may be configured to receive data to be classified. The discriminator module 508 may be configured to classify received data as corresponding to a classified category or a novel data category. In some examples, the discriminator module 508 can be configured to calculate a probability score for the data for each of a plurality of known classes. The discriminator module 508 may be configured to classify the received data as a particular class in response to detecting that the received data comprises a higher probability score for the particular class than other classes. For example, the discriminator module 508 can classify the received data as novel data in response to detecting that the received data does not correspond to known categories of data. A displayer module 510 may be configured to display a list of novel data including the received data. In some examples, the trainer module 506 can train a novelty detection algorithm including a discriminator offline and deploy a novelty-detection algorithm that cannot train on a device. For example, the novelty-detection algorithm may be the discriminator module 508.

The block diagram of Fig. 5 is not intended to indicate that the computer readable media 500 is to include all of the components shown in Fig. 5. Further, the computer readable media 500 may include any number of additional components not shown in Fig. 5, depending on the details of the specific implementation.

*EXAMPLES*

Example 1 is an apparatus for detecting novel data. The apparatus includes a discriminator of a generative adversarial network, trained using a generator of the generative adversarial network, to receive data to be classified. The discriminator is also trained to classify the received data as novel data in response to detecting that the received data does not correspond to known categories of data.

Example 2 includes the apparatus of example 1, including or excluding optional features. In this example, the discriminator is trained iteratively with the generator based on training data, wherein the generator is to generate novel data based on the training data using a loss function.

Example 3 includes the apparatus of any one of examples 1 to 2, including or excluding optional features. In this example, the generator is trained based on a boundary-seeking loss function.

Example 4 includes the apparatus of any one of examples 1 to 3, including or excluding optional features. In this example, the generator is trained based on a feature-matching loss function.

Example 5 includes the apparatus of any one of examples 1 to 4, including or excluding optional features. In this example, the generator is trained based on a combined loss function based on a boundary-seeking loss function and a feature-matching loss function.

Example 6 includes the apparatus of any one of examples 1 to 5, including or excluding optional features. In this example, the discriminator is trained based on novel data samples generated by the generator based on training data.

Example 7 includes the apparatus of any one of examples 1 to 6, including or excluding optional features. In this example, the discriminator is to classify the received data as a particular class in response to detecting that the received data corresponds to a known class of data.

Example 8 includes the apparatus of any one of examples 1 to 7, including or excluding optional features. In this example, the discriminator is to classify the received data as a particular class in response to detecting that the received data includes a higher probability score for the particular class than other classes.

Example 9 includes the apparatus of any one of examples 1 to 8, including or excluding optional features. In this example, the novel data includes data different from the training data.

Example 10 includes the apparatus of any one of examples 1 to 9, including or excluding optional features. In this example, the received data includes visual data, text, speech, a genetic sequence, a biomedical signal, a marker, or any combination thereof.

Example 11 is a method for training a discriminator. The method includes receiving, via a processor, training data. The method also includes training, via the processor, a generator iteratively with the discriminator to generate novel data samples based on the training data. The method further includes training, via the processor, the discriminator iteratively with the generator to classify data into classified categories or a novel category based on the training data and the novel data samples.

Example 12 includes the method of example 11, including or excluding optional features. In this example, the method includes receiving, via the discriminator, data to be classified; classifying, via the discriminator, the received data as novel data in response to detecting that the received data does not correspond to known categories of data; and; displaying, via the processor, a list of novel data including the received data.

Example 13 includes the method of any one of examples 11 to 12, including or excluding optional features. In this example, the method includes classifying, via the discriminator, the data in a corresponding classification category in response to detecting that the data corresponds to that category.

Example 14 includes the method of any one of examples 11 to 13, including or excluding optional features. In this example, training the generator includes using a boundary-seeking loss function to generate the novel data samples.

Example 15 includes the method of any one of examples 11 to 14, including or excluding optional features. In this example, training the generator includes using a feature-matching loss function to generate the novel data samples.

Example 16 includes the method of any one of examples 11 to 15, including or excluding optional features. In this example, training the generator includes using a combined loss function based on a boundary-seeking loss function and a feature-matching loss function to generate the novel data samples.

Example 17 includes the method of any one of examples 11 to 16, including or excluding optional features. In this example, iteratively training the discriminator includes sending the generated novel data samples and data samples corresponding to one or more categories from the training data to the discriminator and adjusting a parameter of the discriminator based on an output classification from the discriminator.

Example 18 includes the method of any one of examples 11 to 17, including or excluding optional features. In this example, the discriminator is trained to classify the received data as novel data in response to detecting that the received data does not correspond to classified categories of data.

Example 19 includes the method of any one of examples 11 to 18, including or excluding optional features. In this example, classifying the received data includes calculating a probability score for the data for each of a plurality of known classes.

Example 20 includes the method of any one of examples 11 to 19, including or excluding optional features. In this example, classifying the received data includes classifying the received data as a particular class in response to detecting that the received data includes a higher probability score for the particular class than other classes.

Example 21 is at least one computer readable medium for training a discriminator having instructions stored therein that in response to being executed on a computing device, cause the computing device to receive training data. The instructions may also cause the computing device to train a generator with a discriminator to generate novel data samples based on the training data. The instructions may further cause the computing device to iteratively train the discriminator with the generator to classify data into classified categories or a novel category based on the training data and the novel data samples.

Example 22 includes the computer-readable medium of example 21, including or excluding optional features. In this example, the computer-readable medium includes instructions to: receive data to be classified; classify the received data as novel data in response to detecting that the received data does not correspond to known categories of data; and; display a list of novel data including the received data.

Example 23 includes the computer-readable medium of any one of examples 21 to 22, including or excluding optional features. In this example, the computer-readable medium includes instructions to train the generator using a boundary-seeking loss function.

Example 24 includes the computer-readable medium of any one of examples 21 to 23, including or excluding optional features. In this example, the computer-readable medium includes instructions to train the generator using a feature-matching loss function.

Example 25 includes the computer-readable medium of any one of examples 21 to 24, including or excluding optional features. In this example, the computer-readable medium includes instructions to train the generator using a combined loss function based on a boundary-seeking loss function and a feature-matching loss function.

Example 26 includes the computer-readable medium of any one of examples 21 to 25, including or excluding optional features. In this example, the computer-readable medium includes instructions to train the generator using a combined loss function based on a boundary-seeking loss function and a feature-matching loss function to generate the novel data samples.

Example 27 includes the computer-readable medium of any one of examples 21 to 26, including or excluding optional features. In this example, the computer-readable medium includes instructions to send the generated novel data samples and data samples corresponding to one or more categories from the training data to the discriminator and adjust a parameter of the discriminator based on an output classification from the discriminator.

Example 28 includes the computer-readable medium of any one of examples 21 to 27, including or excluding optional features. In this example, the computer-readable medium includes instructions to train the discriminator to classify the received data as novel data in response to detecting that the received data does not correspond to classified categories of data.

Example 29 includes the computer-readable medium of any one of examples 21 to 28, including or excluding optional features. In this example, the computer-readable medium includes instructions to calculate a probability score for the data for each of a plurality of known classes.

Example 30 includes the computer-readable medium of any one of examples 21 to 29, including or excluding optional features. In this example, the computer-readable medium includes instructions to classify the received data as a particular class in response to detecting that the received data includes a higher probability score for the particular class than other classes.

Example 31 is a system for detecting novel data. The system includes a discriminator of a generative adversarial network, trained using a generator of the generative adversarial network, to receive data to be classified. The discriminator may also be trained to classify the received data as novel data in response to detecting that the received data does not correspond to known categories of data.

Example 32 includes the system of example 31, including or excluding optional features. In this example, the discriminator is trained iteratively with the generator based on training data, wherein the generator is to generate novel data based on the training data using a loss function.

Example 33 includes the system of any one of examples 31 to 32, including or excluding optional features. In this example, the generator is trained based on a boundary-seeking loss function.

Example 34 includes the system of any one of examples 31 to 33, including or excluding optional features. In this example, the generator is trained based on a feature-matching loss function.

Example 35 includes the system of any one of examples 31 to 34, including or excluding optional features. In this example, the generator is trained based on a combined loss function based on a boundary-seeking loss function and a feature-matching loss function.

Example 36 includes the system of any one of examples 31 to 35, including or excluding optional features. In this example, the discriminator is trained based on novel data samples generated by the generator based on training data.

Example 37 includes the system of any one of examples 31 to 36, including or excluding optional features. In this example, the discriminator is to classify the received data as a particular class in response to detecting that the received data corresponds to a known class of data.

Example 38 includes the system of any one of examples 31 to 37, including or excluding optional features. In this example, the discriminator is to classify the received data as a particular class in response to detecting that the received data includes a higher probability score for the particular class than other classes.

Example 39 includes the system of any one of examples 31 to 38, including or excluding optional features. In this example, the novel data includes data different from the training data.

Example 40 includes the system of any one of examples 31 to 39, including or excluding optional features. In this example, the received data includes visual data, text, speech, a genetic sequence, a biomedical signal, a marker, or any combination thereof.

Example 41 is a system for detecting novel data. The system includes means for receiving data to be classified. The system includes means for classifying the received data as novel data in response to detecting that the received data does not correspond to known categories of data.

Example 42 includes the system of example 41, including or excluding optional features. In this example, the means for classifying the received data is trained iteratively with a means for generating the novel data based on training data, wherein the means for generating the novel data is to generate novel data based on the training data using a loss function.

Example 43 includes the system of any one of examples 41 to 42, including or excluding optional features. In this example, the system includes means for generating the novel data trained based on a boundary-seeking loss function.

Example 44 includes the system of any one of examples 41 to 43, including or excluding optional features. In this example, the system includes means for generating the novel data trained based on a feature-matching loss function.

Example 45 includes the system of any one of examples 41 to 44, including or excluding optional features. In this example, the system includes means for generating the novel data trained based on a combined loss function based on a boundary-seeking loss function and a feature-matching loss function.

Example 46 includes the system of any one of examples 41 to 45, including or excluding optional features. In this example, the means for classifying the received data is trained based on novel data samples generated by the means for generating the novel data based on training data.

Example 47 includes the system of any one of examples 41 to 46, including or excluding optional features. In this example, the means for classifying the received data is to classify the received data as a particular class in response to detecting that the received data corresponds to a known class of data.

Example 48 includes the system of any one of examples 41 to 47, including or excluding optional features. In this example, the means for classifying the received data is to classify the received data as a particular class in response to detecting that the received data includes a higher probability score for the particular class than other classes.

Example 49 includes the system of any one of examples 41 to 48, including or excluding optional features. In this example, the novel data includes data different from the training data.

Example 50 includes the system of any one of examples 41 to 49, including or excluding optional features. In this example, the received data includes visual data, text, speech, a genetic sequence, a biomedical signal, a marker, or any combination thereof.

Not all components, features, structures, characteristics, etc. described and illustrated herein need be included in a particular aspect or aspects. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

It is to be noted that, although some aspects have been described in reference to particular implementations, other implementations are possible according to some aspects. Additionally, the arrangement and/or order of circuit elements or other features illustrated in the drawings and/or described herein need not be arranged in the particular way illustrated and described. Many other arrangements are possible according to some aspects.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which element is referred to as a first element and which is called a second element is arbitrary.

It is to be understood that specifics in the aforementioned examples may be used anywhere in one or more aspects. For instance, all optional features of the computing device described above may also be implemented with respect to either of the methods or the computer-readable medium described herein. Furthermore, although flow diagrams and/or state diagrams may have been used herein to describe aspects, the techniques are not limited to those diagrams or to corresponding descriptions herein. For example, flow need not move through each illustrated box or state or in exactly the same order as illustrated and described herein.

The present techniques are not restricted to the particular details listed herein. Indeed, those skilled in the art having the benefit of this disclosure will appreciate that many other variations from the foregoing description and drawings may be made within the scope of the present techniques. Accordingly, it is the following claims including any amendments thereto that define the scope of the present techniques.

## Claims

1. An apparatus (100) for detecting novel data, comprising:
   a discriminator (108) of a generative adversarial network (104), trained using a generator (106) of the generative adversarial network, to:

   receive data to be classified; and
   classify the received data as novel data in response to detecting that the received data does not correspond to known categories of data.

2. The apparatus of claim 1, wherein the discriminator is trained iteratively with the generator based on training data, wherein the generator is to generate novel data based on the training data using a loss function.

3. The apparatus of any combination of claims 1-2, wherein the generator is trained based on a boundary-seeking loss function.

4. The apparatus of any combination of claims 1-3, wherein the generator is trained based on a feature-matching loss function.

5. The apparatus of any combination of claims 1-4, wherein the generator is trained based on a combined loss function based on a boundary-seeking loss function and a feature-matching loss function.

6. The apparatus of any combination of claims 1-5, wherein the discriminator is trained based on novel data samples generated by the generator based on training data.

7. The apparatus of any combination of claims 1-6, wherein the discriminator is to classify the received data as a particular class in response to detecting that the received data corresponds to a known class of data.

8. The apparatus of any combination of claims 1-7, wherein the discriminator is to classify the received data as a particular class in response to detecting that the received data comprises a higher probability score for the particular class than other classes.

9. The apparatus of any combination of claims 1-8, wherein the novel data comprises data different from the training data.

10. The apparatus of any combination of claims 1-9, wherein the received data comprises visual data, text, speech, a genetic sequence, a biomedical signal, a marker, or any combination thereof.

11. A method (200) for training a discriminator, comprising:

receiving (202), via a processor, training data;
training (204), via the processor, a generator iteratively with the discriminator to generate novel data samples based on the training data; and
training (206), via the processor, the discriminator iteratively with the generator to classify data into classified categories or a novel category based on the training data and the novel data samples.

12. The method of claim 11, comprising:

receiving (302), via the discriminator, data to be classified;
classifying (304), via the discriminator, the received data as novel data in response to detecting that the received data does not correspond to known categories of data; and;
displaying (306), via the processor, a list of novel data comprising the received data.

13. The method of any combination of claims 11-12, comprising classifying, via the discriminator, the data in a corresponding classification category in response to detecting that the data corresponds to that category.

14. The method of any combination of claims 11-13, wherein training the generator comprises using a boundary-seeking loss function to generate the novel data samples.

15. The method of any combination of claims 11-13, wherein training the generator comprises using a feature-matching loss function to generate the novel data samples.

100
FIG. 1

Receive Training Data — 202

Train Generator to Generate Novel Data Samples Based on the Training Data — 204

Train Discriminator Iteratively with Generator to Classify Data Into Classified Categories or Novel Category Based on Training Data and Novel Data Samples — 206

<u>200</u>

# FIG. 2

Receive Data to be Classified at Discriminator Trained Iteratively with Generator Using Loss Function ⟍ 302

Classify Received Data as Novel Data in Response to Detecting that the Received Data Does Not Correspond to Known Categories of Data ⟍ 304

Output List of Novel Data ⟍ 306

300

FIG. 3

FIG. 4

FIG. 5

**EUROPEAN SEARCH REPORT**

Application Number

EP 18 16 9136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Tim Salimans ET AL: "Improved Techniques for Training GANs", Proceeding NIPS'16 Proceedings of the 30th International Conference on Neural Information Processing Systems, 5 December 2016 (2016-12-05), pages 2234-2242, XP055506346, Retrieved from the Internet: URL:http://delivery.acm.org/10.1145/316000 0/3157346/p2234-salimans.pdf?ip=145.64.134 .245&id=3157346&acc=NO%20RULES&key=E80E9EB 78FFDF9DF.4D4702B0C3E38B35.4D4702B0C3E38B3 5.4D4702B0C3E38B35&__acm__=1536680833_17d7 faf97d63503487675b2da9a6de44 [retrieved on 2018-09-11] | 1,2,4, 6-13,15 | INV. G06N3/04 |
| Y | * abstract; figure 3 * <br> * page 1, line 1 - page 2, last line * <br> * section 5 * <br> * section 6 * <br> ----- | 3,5,14 | |
| Y | DEVON HJELM R ET AL: "Boundary-Seeking Generative Adversarial Networks", ARXIV.ORG, CORNELL UNIVERSITY LIBRARY, 201 OLIN LIBRARY CORNELL UNIVERSITY ITHACA, NY 14853, 27 February 2017 (2017-02-27), XP080748810, * section 1 * <br> * section 2.3 * <br> * section 2.4 * <br> * section 6 * <br> ----- <br> -/-- | 3,5,14 | TECHNICAL FIELDS SEARCHED (IPC) <br><br> G06N |

The present search report has been drawn up for all claims

| Place of search | Date of completion of the search | Examiner |
|---|---|---|
| The Hague | 27 September 2018 | Totir, Felix |

page 1 of 3

Europäisches
Patentamt

European
Patent Office

Office européen
des brevets

# EUROPEAN SEARCH REPORT

Application Number

EP 18 16 9136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GILLES BLANCHARD ET AL: "Semi-supervised novelty detection", JOURNAL OF MACHINE LEARNING RESEARCH, vol. 11, 1 November 2010 (2010-11-01), pages 2973-3009, XP055309307, * abstract * * page 2793, line 1 - page 2795, line 20 * * page 2977, line 8 - page 2979, last line * * page 2999, line 1 - last line * | 1-14 | |
| A | Jost Tobias Springenberg: "UNSUPERVISED AND SEMI-SUPERVISED LEARNING WITH CATEGORICAL GENERATIVE ADVERSARIAL NETWORKS", , 30 April 2016 (2016-04-30), pages 1-20, XP055506693, Retrieved from the Internet: URL:https://arxiv.org/pdf/1511.06390.pdf [retrieved on 2018-09-13] * abstract; figures 1,3 * * page 3, line 1 - page 6, last line * | 1-14 | |
| X,P | Mark Kliger ET AL: "Novelty Detection with GAN", , 28 February 2018 (2018-02-28), pages 1-10, XP055506330, Retrieved from the Internet: URL:https://arxiv.org/pdf/1802.10560.pdf [retrieved on 2018-09-11] * abstract * * page 1, line 1 - page 6, last line * | 1-14 | TECHNICAL FIELDS SEARCHED (IPC) |

-/--

The present search report has been drawn up for all claims

| Place of search | Date of completion of the search | Examiner |
|---|---|---|
| The Hague | 27 September 2018 | Totir, Felix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 18 16 9136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | THOMAS SCHLEGL ET AL: "Unsupervised Anomaly Detection with Generative Adversarial Networks to Guide Marker Discovery", ARXIV.ORG, CORNELL UNIVERSITY LIBRARY, 201 OLIN LIBRARY CORNELL UNIVERSITY ITHACA, NY 14853, 17 March 2017 (2017-03-17), XP080757690, DOI: 10.1007/978-3-319-59050-9_12 * abstract; figures 1,2 * * section 2.1 * * section 2.2 * * section 2.3 * ----- | 1-14 | |
| | | | TECHNICAL FIELDS SEARCHED (IPC) |

The present search report has been drawn up for all claims

| Place of search | Date of completion of the search | Examiner |
|---|---|---|
| The Hague | 27 September 2018 | Totir, Felix |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)